# EUROPÄISCHE PATENTANMELDUNG

(11) **EP 1 820 565 A1**
(43) Veröffentlichungstag der Anmeldung: **22.08.2007**
(21) Anmeldenummer: 06090141.0
(22) Anmeldetag: 18.08.2006
(51) Int. Cl.: B01D 65/04, B01D 65/08, C02F 3/12, C02F 3/10

(54) **Verfahren zur Freihaltung der aktiven Oberfläche einer Membran, insbesondere einer in einem Membranmodul für die Abwasserreinigung angeordneten Membran, von eine Deckschicht bildenden Ablagerungen**

(30) Priorität: 17.02.2006 DE 102006008453
(71) Anmelder: Martin Bergmann Umwelttechnik, 09322 Penig (DE)
(72) Erfinder: Bergmann, Martin, 09322 Penig (DE); Triller, Wolfgang, 12555 Berlin (DE); Ilian, Jens, 03044 Cottbus (DE)
(74) Vertreter: Neumann, Günter

(57) **Zusammenfassung**

Die Erfindung betrifft ein Verfahren zur Freihaltung der aktiven Oberfläche einer in einem flüssigen Medium eingesetzten Filtermembran von eine Deckschicht bildenden Ablagerungen, insbesondere einer in einem Filtermembranmodul für die Abwasserreinigung angeordneten Filtermembran. Im Betriebszustand der Filtermembran werden an deren aktiven Oberfläche in einem gerichteten Gas/Flüssigkeitsstrom Formkörper als Abrasionskörper zwangsweise vorbeigeführt. Sie kommen dabei mit der Oberfläche der Filtermembran in Kontakt. Eine bereits auf der Oberfläche vorhandene und eine Filtration zumindest hemmende Deckschicht wird abgelöst oder die Bildung einer Deckschicht wird verhindert. Die Poren der Filtermembran werden frei gelegt oder frei gehalten.

Als Filtermembran werden polymerbasierte oder eine keramikbasierte Filtermembran oder eine Filtermembran aus gesintertem Metall oder aus einem porösen Glas verwendet.

Die Erfindung ist besonders für Kläranlagen, vor allem biologische Kleinkläranlage, geeignet. Die Filterwirkung wird auf konstant hohem Niveau gehalten. Dies macht sich Wartungsintervalle und Lebensdauer der Membran besonders positiv bemerkbar.

## Beschreibung

Die Erfindung betrifft ein Verfahren zur Freihaltung der aktiven Oberfläche einer Membran, insbesondere einer in einem Membranmodul für die Abwasserreinigung angeordneten Membran, von eine Deckschicht bildenden Ablagerungen. Anwendungsgebiet des Verfahrens sind insbesondere modulare Membran-Filterstufen bei Einsatz in Kleinkläranlagen.

Die wachsenden Anforderungen an den Umweltschutz bringen es mit sich, dass international intensiv nach Wegen gesucht wird, um die Belastungen der Umwelt, insbesondere durch Abgase und Abwasser weiter zu reduzieren.

Neben Filtern, insbesondere Feinfiltern, kommen zur Reinigung von Abgasen und Wasser zunehmend auch Membranen zum Einsatz. So ist in der DE 198 07 890 eine Kläranlage beschrieben, deren Abwasser durch getauchte Mikrofiltrationsmembranen gereinigt wird, um es danach in einen Brauchwasserspeicher zu leiten und wieder zu verwerten.

In der DE 203 15 451 wird eine Mikrofiltrationseinrichtung als Nachrüstsatz für eine Kleinkläranlage beschrieben, die nach dem Belebungsbecken und vor dem eigentlichen Ablauf der Kläranlage geschaltet ist.

In allen Fällen kommen dabei organische Filtermembranen zum Einsatz, die in Modulform angeordnet sind. Allerdings haben organische Filtermembranen den Nachteil, dass sie von den Bakterien des Belebungsbeckens angegriffen bzw. zerstört werden, so dass alle diese Membranen in der Regel in relativ kurzen Zeiträumen (< 1 Jahr) erneuert werden müssen. Zudem weisen organische Membranen nur eine eingeschränkte mechanische Stabilität auf, so dass sie bei einem höheren Flüssigkeitsdruck leicht beschädigt werden können. Ein stabiler Langzeitbetrieb ist daher nicht gegeben.

Die Verwendung von Filtermembranen ist zudem mit dem grundsätzlichen Problem verknüpft, dass sich während der Filtration an der Außenfläche der Membran eine Deckschicht abscheidet, die dem zu filtrierenden Gut einen Widerstand entgegenstellt. Dies führt zu einer drastischen Reduzierung der Filterleistung bis hin zur totalen Verstopfung und somit zu einem Totalausfall der Filtermembran. Zum Ablösen dieser Deckschicht auf der Membran bedarf es einer regelmäßigen Reinigung.

Membranen werden daher regelmäßig zurückgespült, mit sehr niedrigem Durchfluss betrieben, zum Teil chemisch gereinigt oder sogar jährlich gewechselt.

Bekannt ist auch, eine Überströmung der Membranoberfläche durch Lufteintrag zu erzeugen. Die aufsteigenden Luftblasen führen zu einer Scherwirkung an der Membranoberfläche, die der sich bildenden Deckschicht entgegengerichtet ist. Dadurch wird die Deckschicht zumindest teilweise abgelöst, wodurch die Effizienz der Filterleistung für eine gewisse Zeit wieder erhöht ist. Allerdings erfordert dieses Vorgehen in der Regel ein separates kostenaufwendiges Equipment.

Bei einer Rückspülung mit gereinigtem Abwasser (Permeat) wird die Reinigung zudem mit einem Verlust an bereits gereinigtem Abwasser erkauft, was die Effektivität einer Anlage herabsetzt.

Der Erfindung liegt daher die Aufgabe zugrunde, eine einfache und kostengünstige Lösung zur Freihaltung der aktiven Oberfläche von Filtermembranen von Deckschicht bildenden Ablagerungen bereitzustellen.

Erfindungsgemäß wird die Aufgabe durch ein Verfahren mit den Merkmalen des Anspruchs 1 gelöst. Vorteilhafte Ausgestaltungen des erfindungsgemäßen Verfahrens sind mit den Merkmalen der Ansprüche 2 bis 14 dargestellt. Der Wortlaut sämtlicher Ansprüche wird hiermit durch Bezugnahme zum Inhalt dieser Beschreibung gemacht.

Das erfindungsgemäße Verfahren ist insbesondere für die Anwendung in einer Kläranlage, vor allem einer biologischen Kleinkläranlage, vorgesehen. Durch das Verfahren wird die Oberfläche der Filtermembran frei von Ablagerungen gehalten. Selbst feinste Verunreinigungen werden abgereinigt. Die Filterwirkung der Membran wird auf konstant hohem Niveau gehalten. Dies macht sich im Hinblick auf Wartungsintervalle und Lebensdauer der Membran besonders positiv bemerkbar.

Bevorzugte Ausführungsformen der Erfindung sehen als Filtermembran polymerbasierte, keramikbasierte oder eine Filtermembran aus gesintertem Metall oder aus einem porösen Glas vor.

Die Intensität des gerichteten Gas/Flüssigkeitsstromes, mit dem die Formkörper an der aktiven Oberfläche der Filtermembran vorbeigeführt werden und die dafür hinsichtlich ihrer Geometrie auszuwählenden Formkörper sind selbstverständlich auf die jeweils verwendete Filtermembran und deren Anordnung in einem Modul abzustellen.

Als besonders stabil hat sich als Filtermembran eine keramikbasierte Membran erwiesen. Eine keramikbasierte Membran zeichnet sich durch Resistenz gegenüber biologischer oder chemischer Einwirkung sowie durch hohe mechanische Stabilität aus.

Bevorzugt handelt es sich bei der Filtermembran um eine Membranplatte oder ein Membranrohr. In der Wahl der Form der Membranplatte oder des Rohres ist man grundsätzlich frei. So können etwa runde oder rechteckige Membranplatten oder schlangenförmige Rohre, abgestimmt auf den jeweiligen Einzelfall, bevorzugt sein. Gleiches gilt auch für die Dimensionen einer Membranplatte hinsichtlich der Länge und Breite sowie für die Länge einer Rohrmembran.

Eine besonders bevorzugte Ausführungsform des erfindungsgemäßen Verfahrens sieht vor, die Formkörper mindestens zwischen zwei, im Wesentlichen parallel zueinander angeordneten Membranplatten zu führen. In einem Modul können mehrere Membranplatten mit im Wesentlichen immer gleichem Abstand angeordnet sein.

Eine weitere bevorzugte Ausführungsform des Verfahrens sieht vor, dass die Formkörper kugel-, tonnen- oder würfelförmig ausgebildet sein können und die vorzugsweise eine größere Oberfläche als glatte Formkörper der gleichen Größe aufweisen, besonders bevorzugt mit einer mindestens dem 1,5-fachen der glatten Außenfläche eines glatten Formkörpers.
Für das erfindungsgemäße Verfahren geeignete Formkörper sind zum Beispiel in den EP 575 314, EP 685 432 und EP 750 591 beschrieben. Dabei handelt es sich bevorzugt um Formkörper aus Kunststoff auf der Basis von Polyethylen oder Polypropylen, die eine maximale Raumdiagonale im Bereich zwischen 0,1 cm und 10 cm, vorzugsweise zwischen 0,5 cm und 5 cm, insbesondere zwischen 0,5 cm und 2 cm aufweisen.

Bevorzugt können auch Formkörper mit bioziden Eigenschaften verwendet werden, um zu verhindern, dass sich daran Mikroorganismen ansiedeln.

Gemäß einer bevorzugten Ausführungsform kann für die gerichtete Gas/Flüssigkeitsströmung Luft oder ein inertes Gas, wie Stickstoff, eingesetzt werden. Sofern es sich bei dem flüssigen Medium um Abwasser handelt, wird Luft der Vorzug einzuräumen sein. Im Unterschied dazu kann es bei organischen flüssigen Medien erforderlich sein, Stickstoff oder ein anderes inertes Gas im Hinblick auf eine schonende Behandlung des Mediums zu verwenden.

Bevorzugt kommt als zu behandelndes flüssiges Medium kommunales, industrielles oder gewerbliches Abwasser in Frage. Bevorzugt kann das erfindungsgemäße Verfahren unmittelbar in der biologischen Stufe oder in der Nachklärung einer Kläranlage oder in einem der Nachklärung nachgeschalteten Behälter zur Reinigung des Wassers zur Anwendung kommen, das aus der Nachklärung abgeführt wird. Sofern das erfindungsgemäße Verfahren unmittelbar in der biologischen Stufe einer Kläranlage zur Anwendung kommt, dienen die Formkörper zugleich als Träger für einen Biofilm.

Gemäß einer weiteren bevorzugten Ausführungsform des Verfahrens wird als Filtermembran eine Membran mit einem Porendurchmesser im Bereich zwischen 10 nm und 10 µm, vorzugsweise zwischen 50 nm und 800 nm, verwendet. Bevorzugt kann die Filtermembran mit einer eine Trennschicht versehenen Beschichtung aufweisen, die teilweise aus Teilchen mit einer Größe im Nanometerbereich besteht.
Filtermembran und Beschichtung weisen einen nach außen abnehmenden Porendurchmesser auf.

Nach der vorliegenden Erfindung können die Formkörper mittels einer durch gerichteten Gaseintrag bewirkten Strömungswalze oder mittels eines Leitbleches oder einer anderen Leiteinrichtung zwangsweise an der aktiven Oberfläche der Filtermembran vorbeigeführt werden.

Die genannten und weiteren Vorteile der Erfindung ergeben sich aus der Beschreibung des folgenden Beispiels und der Abbildungen in Verbindung mit den Unteransprüchen. Dabei können die einzelnen Merkmale der Erfindung für sich allein oder in Kombination miteinander verwirklicht sein. Das Beispiel und die Abbildungen dienen lediglich zur Erläuterung und zum besseren Verständnis der Erfindung und sind in keiner Weise einschränkend zu verstehen.

### In den Abbildungen zeigen:

- **Fig. 1a, 1b, 1c**: Verwendeter Formkörper "K1, K2, K3 - Biofilm Carrier Elements" der Fa. Kaldnes, 3103 Tonsberg, Norwegen
- **Fig. 2**: Schematische Darstellung der Funktionsweise einer vollbiologischen Kleinkläranlage mit dem erfindungsgemäßen Verfahren
- **Fig. 3a, 3b, 3c**: Schematische Darstellung der Wirkungsweise der Erfindung im Vergleich zum Stand der Technik
- **Fig. 4**: Ergebnisse eines Tests zur Freihaltung der aktiven Oberfläche einer Filtermembran von einer darauf gebildeten Deckschicht.

### Beispiel 1

Es wurde ein Versuch in einer nach dem wsb^{®}-Verfahren, der Wirbel-Schwebebett-Biofilmtechnologie ohne Rückführung von Belebtschlamm in die biologische Stufe arbeitenden vollbiologischen Kleinkläranlage 1 mit einer Mehrkammergrube gemäß dem DE 298 19 446 U1 durchgeführt.

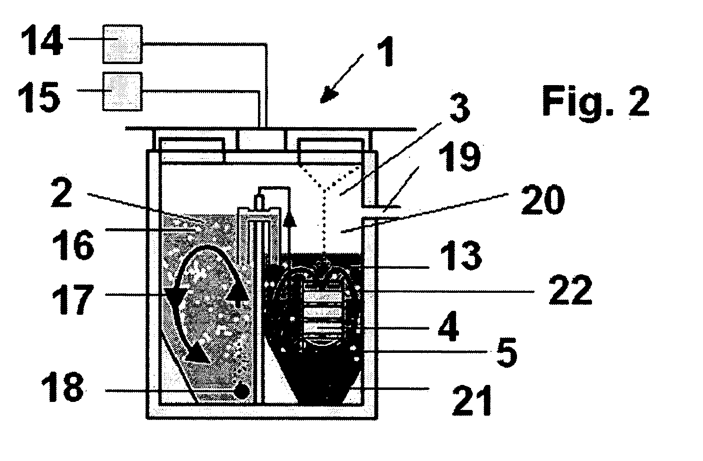

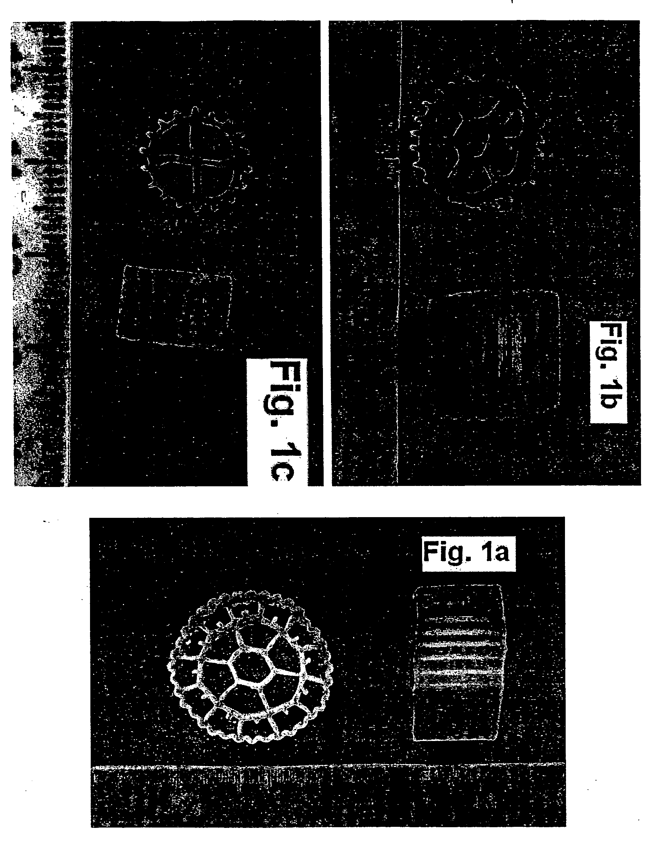

Die **Fig. 2** zeigt in schematischer Darstellung die biologische Stufe 2 der Kleinkläranlage 1 und die Nachklärkammer 3. Die Vorklärkammer ist nicht sichtbar. Eine Pumpe 21 ist für die Rückführung von Schlamm in die hier nicht dargestellte Vorklärkammer vorgesehen. In der Nachklärkammer 3 ist die aus 3 Modulen bestehende Membranfilterstufe 4 angeordnet. Die einzelnen Module werden von einem Stützrahmen, dem Reck, aufgenommen. Die Module bestehen aus mehreren parallel zueinander angeordneten keramischen Flachmembranen. Die Flachmembranen weisen eine Porengröße von ca. 300 nm auf und wurden im Unterdruckverfahren betrieben. Mittels Saugpumpen wurde ein Unterdruck erzeugt, der die Filtration von der Membranaußenseite, der aktiven Oberfläche der Membran, hin zur Membraninnenseite bewirkte. Unterhalb der Membranfilterstufe 4 ist ein Belüfter 5 angeordnet.
Bei der nach dem wsb^{®}-Verfahren betriebenen Kleinkläranlage wurde über mehrere Monate versucht, nur mittels Belüftung Einfluss auf die Entwicklung der Deckschicht zu nehmen, ohne diese jedoch vollständig ablösen zu können.
Zur Anwendung des erfindungsgemäßen Verfahrens wurden in die Nachklärkammer 3 Formkörper des Typs K1 gemäß der **Fig. 1a** eingebracht. In der biologischen Stufe 2 dienten die gleichen Formkörper als Trägermaterial 16 für den Biofilm.
Durch den Belüfter 5 wurde ein Luft/Flüssigkeitsstrom erzeugt, der die Formkörper in einer gerichteten Strömung durch den zwischen benachbarten Filtermembranplatten gebildeten Abstand gleiten ließ. Die Formkörper kamen so mit den sich gegenüberliegenden aktiven Oberflächen der benachbarten Membranplatten unmittelbar in Kontakt. Bereits nach 48 Stunden stellte sich ein neuer, konstanter Betriebspunkt ein. Die Permeabilität stieg um 81%. Die sich über mehrere Wochen gebildete Deckschicht wurde durch die Stöße der Formkörper mechanisch abgelöst.
Es hat sich gezeigt, dass bei der Wahl des Abstandes zwischen benachbarten Membranplatten insbesondere 2 Faktoren eine Rolle spielen. Einerseits besteht das Verlangen, den Abstand möglichst gering zu halten, um eine Filtrationsvorrichtung, vorzugsweise ein Modul, möglichst kompakt zu halten. Zum anderen dürfen sich die Formkörper zwischen den Membranplatten nicht verklemmen, da es ansonsten zur lokalen Ausbildung einer Deckschicht kommen könnte. Der optimale Abstand hängt dabei insbesondere von der Form und Größe der Formkörper ab. So wurde für den Formkörper gemäß **Fig. 1a,** für die eine maximale Raumdiagonale von 13,5 mm ± 0,5 mm ermittelt. Der Abstand überschreitet in diesem Versuch die maximale Raumdiagonale der Formkörper um mehr als 100%.

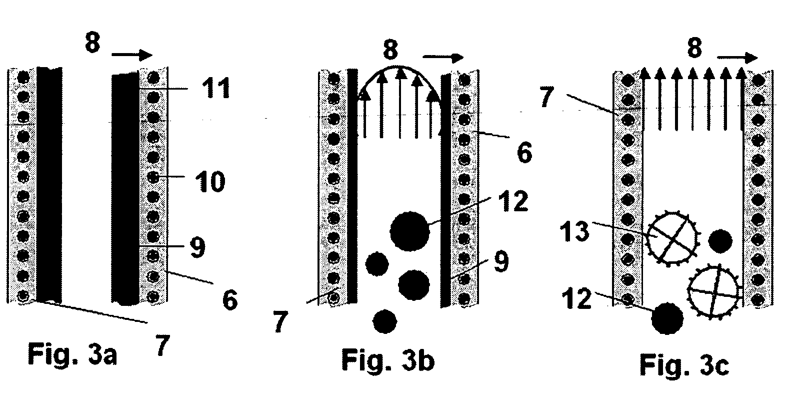

Die **Fig. 3c** zeigt schematisch die Wirkungsweise des erfindungsgemäßen Verfahrens im Vergleich zum Stand der Technik, **Fig. 3a** und **Fig. 3b**..

Aus **Fig. 3c** ist ersichtlich, dass Formkörper 13, hier des Typs K1 gemäß **Fig. 1a,** zusammen mit Luftblasen 12 in einem gerichteten Strom durch den durch die Filtermembranplatten 6 und 7 gebildeten Zwischenraum geführt werden. Eine Deckschicht hat sich auf der aktiven Oberfläche 11 der Filtermembranplatten 6 und 7 nicht gebildet, so dass diese ihre Filterwirkung in vollem Umfang in Saugrichtung 8 entfalten können.
Im Vergleich dazu zeigt **Fig. 3a** die Filtermembranplatten 6 und 7 ohne eine Überströmung der Membranoberfläche. Auf der Membranaußenseite 11, der aktiven Oberfläche, der Membran ist eine Deckschicht 9 dargestellt, die deren Filterwirkung wesentlich reduziert oder sogar vollständig aufhebt.
Aus Fig. 3c sind zwei Filtermembranplatten 6 und 7 zu erkennen, zwischen denen eine Überströmung der Membranoberfläche mittels durch Lufteintrag erfolgt. Die aufsteigenden Luftblasen 12 erzeugen zwar eine Scherwirkung an der Membranoberfläche, können jedoch eine sich bildende Deckschicht 9 nur in ihrer Schichtdicke beeinflussen. Die Filterwirkung der Membranplatten ist eingeschränkt.

### Beispiel 2

In einem weiteren Versuch wurde mittels Eisenhydroxid eine wasserunlösliche Deckschicht auf der Oberfläche der Filtermembranplatten erzeugt. Mit dieser Schicht wurde eine starke Verblockung der Membran simuliert.

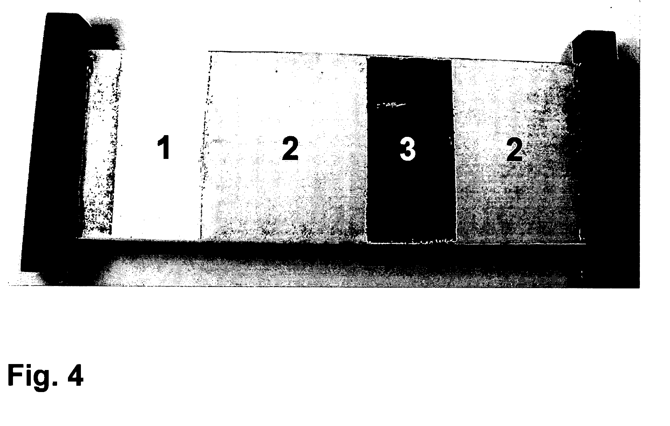

In **Fig. 4** zeigt die Fläche 1 die Membranoberfläche im Ausgangszustand. Sie wurde vor Beginn der Versuche abgeklebt. Die Fläche 3 wurde nach dem Auftragen des Eisenhydroxides abgeklebt. Durch eine Überströmung mittels Luft ist es nicht gelungen, die simulierte Deckschicht aus Eisenhydroxid abzulösen.
Die Filtermembranplatten wurden danach in der biologischen Stufe einer nach dem wsb^{®}-Verfahren arbeitenden Kleinkläranlage eingesetzt. Nach wenigen Stunden der Anströmung der Filtermembranplatten konnte durch das in der biologischen Stufe der Kleinkläranlage ohnehin vorhandene Trägermaterial eine gleichmäßige Reinigung der Membranoberflächen erreicht werden. Es wirkte als Abrasionskörper. Die in **Fig. 4** dargestellten Flächen zeigen den abgeklebten, also den ursprünglichen Zustand. Die gereinigten Flächen 2 zeigten keine signifikanten Farbänderungen gegenüber der Fläche 1 in ihrem ursprünglichen Zustand.

Obwohl Ausführungsbeispiele der Erfindung zur Erläuterung gezeigt und beschrieben wurden, ist die Erfindung nicht auf diese Ausführungsbeispiel beschränkt. Die Erfindung umfasst auch alle Ausführungen und Modifikationen des Verfahrens in anderen als in wässrigen Medien und auch alle möglichen Formen von Filtermembranen, soweit diese innerhalb des Schutzumfanges der Ansprüche liegen.

## Patentansprüche

1. Verfahren zur Freihaltung der aktiven Oberfläche einer in einem flüssigen Medium eingesetzten Filtermembran von eine Deckschicht bildenden Ablagerungen, insbesondere einer in einem Filtermembranmodul für die Abwasserreinigung angeordneten Filtermembran, **dadurch gekennzeichnet, dass** im Betriebszustand der Filtermembran an deren aktiven Oberfläche in einem gerichteten Gas/Flüssigkeitsstrom Formkörper als Abrasionskörper zwangsweise vorbeigeführt werden und dabei mit der aktiven Oberfläche der Filtermembran in Kontakt kommen wobei dadurch eine bereits auf der aktiven Oberfläche vorhandene und eine Filtration zumindest hemmende Deckschicht abgelöst oder die Bildung einer Deckschicht verhindert wird und auf diese Weise die Poren der Filtermembran frei gelegt oder frei gehalten werden.

2. Verfahren nach Anspruch 1, **dadurch gekennzeichnet, dass** als Filtermembran eine polymerbasierte oder eine keramikbasierte Filtermembran oder eine Filtermembran aus gesintertem Metall oder aus einem porösen Glas verwendet wird.

3. Verfahren nach Anspruch 1 oder 2, **dadurch gekennzeichnet, dass** als Filtermembran eine plattenförmig oder als Rohr ausgebildete Filtermembran verwendet wird.

4. Verfahren nach einem der Ansprüche 1 bis 3, **dadurch gekennzeichnet, dass** die Formkörper mindestens zwischen 2 im Wesentlichen parallel zueinander angeordneten Filtermembranplatten geführt werden.

5. Verfahren nach einem der Ansprüche 1 bis 4, **dadurch gekennzeichnet, dass** als Formkörper Formkörper aus Kunststoff, insbesondere auf Basis von Polyethylen oder Polypropylen, eingesetzt werden.

6. Verfahren nach einem der Ansprüche 1 bis 5, **dadurch gekennzeichnet, dass** als Formkörper kugel-, tonnen- oder würfelförmig ausgebildete Formkörper eingesetzt werden, die vorzugsweise eine größere Oberfläche als glatte Formkörper der gleichen Größe, besonders bevorzugt mit einer mindestens dem 1,5-fachen der Außenfläche eines glatten Formkörpers.

7. Verfahren nach einem der Ansprüche 1 bis 6, **dadurch gekennzeichnet, dass** als Formkörper ein Formkörper mit bioziden Eigenschaften eingesetzt wird.

8. Verfahren nach einem der Ansprüche 1 bis 7, **dadurch gekennzeichnet, dass** als Formkörper Formkörper mit einer maximalen Raumdiagonale im Bereich zwischen 0,1 cm und 10 cm, vorzugsweise zwischen 0,5 cm und 5 cm, insbesondere zwischen 0,5 cm und 2 cm, verwendet werden.

9. Verfahren nach einem der Ansprüche 1 bis 8, **dadurch gekennzeichnet, dass** für den Gasstrom Luft oder ein inertes Gas, wie beispielsweise Stickstoff, verwendet wird.

10. Verfahren nach einem der Ansprüche 1 bis 9, **dadurch gekennzeichnet, dass** als flüssiges Medium zu klärendes kommunales Abwasser der biologischen Stufe einer Kläranlage, das Abwasser in der Nachklärung oder das aus der Nachklärung geführte Abwasser und/oder zu klärendes industrielles oder gewerbliches Abwasser eingesetzt wird.

11. Verfahren nach einem der Ansprüche 1 bis 10, **dadurch gekennzeichnet, dass** als Filtermembran eine Filtermembran mit einem Porendurchmesser im Bereich zwischen 10 nm und 10 µm, vorzugsweise zwischen 500 nm und 800 nm, eingesetzt wird.

12. Verfahren nach einem der Ansprüche 1 bis 11, **dadurch gekennzeichnet, dass** als Filtermembran eine Filtermembran mit einer eine Trennschicht aufweisenden Beschichtung eingesetzt wird, die teilweise aus Partikeln im Nanometerbereich besteht.

13. Verfahren nach den Ansprüchen 1, 4 und 8, **dadurch gekennzeichnet, dass** zwischen parallel angeordneten benachbarten Filtermembranplatten ein Abstand gewählt wird, der mindestens dem 2-fachen, vorzugsweise mindestens dem 3-fachen der maximalen Raumdiagonale des Formkörpers entspricht.

14. Verfahren nach einem der Ansprüche 1 bis 13, **dadurch gekennzeichnet, dass** die Formkörper mittels einer durch gerichteten Gaseintrag bewirkten Strömungswalze oder mittels einer Leiteinrichtung, wie eines Leitbleches, zwangsweise an der aktiven Oberfläche der Filtermembran vorbeigeführt oder direkt auf die Oberfläche der Membran geführt werden.
